(19) Europäisches Patentamt
European Patent Office
Office européen des brevets

(11) Publication number: 0 010 132
B1

(12) # EUROPEAN PATENT SPECIFICATION

(45) Date of publication of patent specification: 28.07.82

(51) Int. Cl.³: C 09 D 5/24, C 09 D 3/58, C 08 L 63/00

(21) Application number: 79103058.8

(22) Date of filing: 21.08.79

(54) **Weldable coating compositions.**

(30) Priority: 25.08.78 US 937022

(43) Date of publication of application: 30.04.80 Bulletin 80/9

(45) Publication of the grant of the patent: 28.07.82 Bulletin 82/30

(84) Designated Contracting States: DE FR GB NL SE

(56) References cited:
BE - A - 682 658
CA - A - 960 395
DE - A - 2 637 223
FR - A - 1 533 642
FR - A - 1 554 780
US - A - 4 049 600

CHEMICAL ABSTRACTS, vol. 88, 1978, pages 71—72, no. 52105z

(73) Proprietor: THE DOW CHEMICAL COMPANY
Dow Center 2030 Abbott Road Post Office Box 1967
Midland Michigan 48640 (US)

(72) Inventor: Bertram, James Lambert
115 Southern Oaks Drive
Lake Jackson Brazoria, Texas (US)

(74) Representative: Hann, Michael, Dr.
Marburger Strasse 38
D-6300 Giessen (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Weldable coating compositions

The automotive industry employs steel having coatings which are substantially corrosion resistant and which withstand the stress and stretching of sheet metal stamping and forming operations. Coatings currently in use include a base coat of a proprietary composition containing zinc and chromic acid and a top coating of a linear high molecular weight epoxy resin or phenoxy resin containing zinc. Such is well described in an article by Dr. Alexander W. Kennedy entitled "ZINCROMETAL:COIL COATINGS ANSWER TO CORROSION" published in *MODERN PAINT AND COATINGS*, September 1976, pages 21—26.

These high molecular weight epoxy or phenoxy resins employed as the binder in such coatings have weight average molecular weights of about 30,000 and above. The coatings of the present invention are equal to or superior to these binders in the double draw test while having weight average molecular weights much less, e.g., less than about 10,000.

The present invention is directed; to a weldable coating composition comprising an electrically conductive pigment, an epoxy resin binder which is the reaction product of a polyglycidyl ether and an amine, and a solvent characterized in that the epoxy resin binder is the reaction product of an epoxy resin which is a polyglycidyl ether of a poly-hydroxyl-containing compound or mixture of such epoxy resins having an average of more than one, but less than three vicinal epoxy groups per molecule and a compound having only two amine hydrogen atoms, wherein the epoxy resin has an epoxide equivalent weight of less than 250, preferably less than about 200 and when the epoxy resin contains aromatic, or cycloaliphatic groups substituted with halogen atoms, the epoxide equivalent weight is calculated on the basis of the halogen atoms being hydrogen atoms, wherein the epoxy:amine hydrogen equivalent ratio ranges from 0.9:1 to 1.1:1, preferably from 0.95:1 to 1.03:1.

Optionally, up to 10 percent, preferably up to 5 percent of the amine hydrogen equivalents are contributed by a compound having only one amine hydrogen.

Belgian Patent BE - A - 682 658 refers to antirusting paint compositions which are weldable and contain an epoxy resin as binder and carbon black as electrically conductive pigment. As èpoxy resin, only a fatty acid ester modified by epoxydation is specifically disclosed. No reaction of the epoxy resin with an amine is shown.

Canadian Patent CA - A - 960 395 provides an electrically conductive paint comprising a solid grade diglycidyl polyether of bisphenol A dissolved in a solvent mixture and containing carbon black. The diglycidyl polyether has an equivalent weight of from 450 to 1000. This paint may be cured by an amine. Specifically only polyamines are shown which contain more than 2 amine hydrogen atoms.

The curing of epoxy resins with primary amines, such as n-butyl amine or mixtures of primary and secondary amines, is known from "Epoxy Resins Chemistry & Technology" edited by May and Tanaka. This publication mentions the use of such amines within a general description of epoxy resins and without reference to the subject of this invention.

Suitable epoxy resins which can be employed herein include the glycidyl ethers of polyhydroxyl-containing compounds having less than three hydroxyl groups, preferably dihydroxyl-containing compounds, such as, for example, resorcinol, catechol, hydroquinone, bisphenols, polyalkylene glycols, novolac resins and mixtures thereof.

Particularly suitable are those glycidyl ethers represented by the following formulas:

(I)

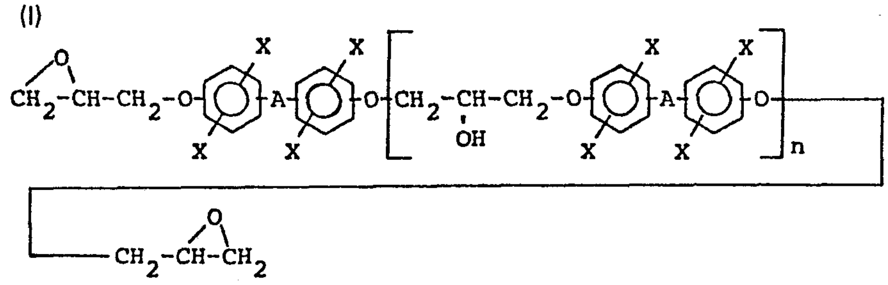

(II)

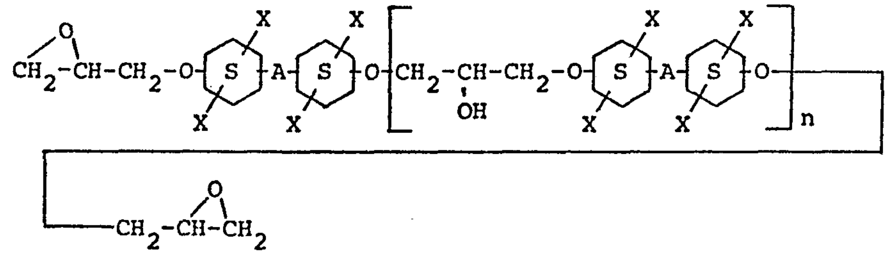

(III)

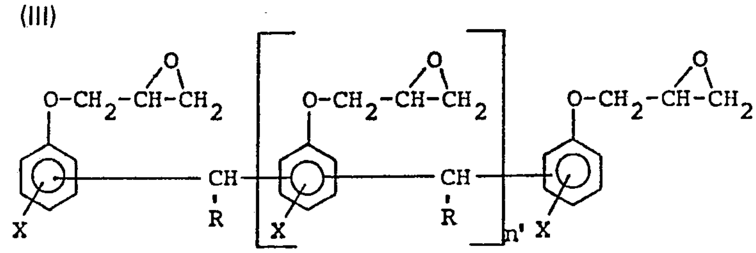

(IV)

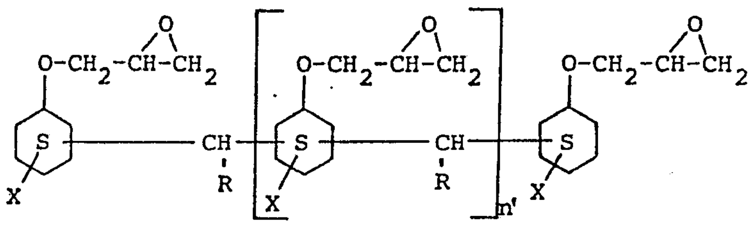

wherein

A is a divalent hydrocarbon group having from 1 to 6 carbon atoms,

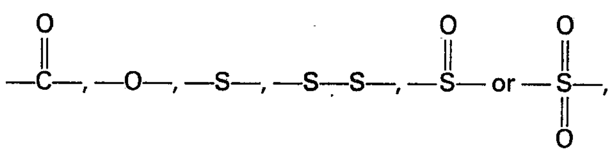

each X is independently hydrogen, chlorine or bromine, each R is hydrogen or an alkyl group having from 1 to 4 carbon atoms, n has an average value of from 0 to 0.6, preferably from 0 to 0.2, and each n' has an average value of from 0.01 to 0.6, preferably from 0.05 to 0.2.

Suitable compounds having only two amine hydrogen atoms which can be employed herein include, for example, ethanolamine, propanolamine, methylamine, ethylamine, propylamine, butylamine, aniline, furfurylamine, piperazine, and mixtures thereof. Preferably, the compounds having only two amine hydrogen atoms are non-aromatic amines.

Suitable compounds having only one amine hydrogen atom, which can be employed herein, include, for example, diethanolamine, dipropanolamine, diethylamine, dipropylamine, dibutylamine, and mixtures thereof.

Suitable solvents which may be employed herein include the oxygenated solvents such as the glycol ethers such as ethylene glycol methyl ether, ethylene glycol butyl ether, ethylene glycol ethyl ether, diethylene glycol ethyl ether, diethylene glycol n-butyl ether, diethylene glycol ethyl ether, propylene glycol methyl ether, dipropylene glycol methyl ether, and mixtures thereof, and in admixture with aromatic solvents such as, for example, xylene, toluene, and ethylbenzene.

The particular quantity of solvent employed is not critical although sufficient solvent should be employed during the preparation of the resin so as to permit sufficient agitation at low energy levels. Also, sufficient solvent should later be employed so as to permit suitable application viscosities of the coatings.

Suitable electrically conductive pigments which can be employed herein include, for example, aluminum, copper, cadmium, steel, carbon, zinc, magnetite, i.e., the magnetic oxide of iron, and mixtures thereof such as, for example, a mixture of aluminum flake and zinc powder. Generally, the carbon pigments, e.g., channel blacks or furnace blacks, are the most finely divided of these electrically conductive pigments, often having a particle size of 0.01 micron for the intensely black pigments. Comparatively, the finely divided aluminum powders have a flake thickness for the finest grades of about 0.25 micron. These aluminum pigments can be typically produced by stamping, generally of small pieces of aluminum foil, or by ball milling atomized aluminum formed by air blasting a molten aluminum spray. Typically, a finely divided zinc pigment is a distilled zinc dust or particles prepared by atomizing molten zinc in an air stream. Particle sizes for distilled zinc powders often average from 2 to 6 microns with generally about 99 weight percent or better passing a 240 mesh U.S. Standard Sieve.

Since these coatings generally are applied preparatory to subsequent welding of the substrate, they must contain a substantial amount of the electroconductive pigment, e.g., at least 30 volume percent pigment and often more than 65 percent by volume of particulate pigment, but on a weight

basis, because of the density of the pigment, these coatings can contain up to about 90 weight percent of such pigment.

In some instances, it may be desirable to employ additives to the compositions of the present invention such as, for example, wetting agents, flow control agents, thixotropic agents, antisettling agents, moisture absorbents or scavengers.

The following examples are illustrative of the present invention and are not to be construed as to limiting the scope thereof in any manner.

A series of experiments were conducted wherein an amine compound and an initial 145.3 gram quantity of ethylene glycol ethyl ether solvent were heated in a one liter glass flask equipped with stirrer, temperature control and indicator means, and reflux condenser to 100°C under an atmosphere of nitrogen. Then a diglycidyl ether of bisphenol A, having an epoxide equivalent weight of 183, was slowly added over a period of 30 minutes. After completion of the epoxy resin addition, the contents were heated for three hours at 130°C. In some of the experiments, additional quantities of ethylene glycol ethyl ether solvent were added to reduce the viscosity so as to facilitate easier stirring. After the three hours, an additional quantity of ethylene glycol ethyl ether solvent was added so as to bring the concentration of the reaction product to 32 percent resinous reaction product and 68 percent solvent.

The amine compounds, quantities and results are given in the following table.

Coatings were prepared by adding zinc dust (2 to 4 micron average particle size) in a sufficient quantity so as to provide 85 percent zinc by weight based upon the combined weight of zinc and resinous product and an additional quantity of ethylene glycol ethyl ether solvent was added so as to provide a composition containing 20 percent non-volatile (resin + zinc) by weight. The coating was prepared by mixing in a high shear mixer for about 10 minutes.

The coatings were then applied to panels by means of an 18 gauge Meyer wound wire rod and baked in an oven at 200° to 300°C for 1½ to 10 minutes. Typical dry film thicknesses were 0.25 to 0.5 min (0.000635 cm to 0.00127 cm).

The panels were then subjected to a draw test.

The panels employed were cleaned cold rolled steel having dimensions of 0.025 × 4 × 12 inches (0.064 × 10.16 × 30.48 cm).

TABLE I

| | Example 1 | Example 2 | Example 3 | Example 4 |
|---|---|---|---|---|
| Epoxy Resin, equiv. | 0.97 | 1.03 | 1.03 | 1.02 |
| Amine | | | | |
| Type/equiv.[4] | A[7]/1.0 | A/1.0 | A/1.0 | A/1.0 |
| Solvent Concentration[1], % | 30[6] | 20 | 40 | 40 |
| Residual Epoxide, % | 0 | 0.22 | 0.19 | 0.03 |
| Viscosity[2] at 32% N.V. | $Z_1$—$Z_2$ | $Z_6$ | $Z_6$ | $Z_6$—$Z_7$ |
| Average Molecular Weight[5] | | | | |
| Weight | 5,605 | 9,624 | 8,804 | 7,775 |
| Number | 2,024 | 1,707 | 2,958 | 2,791 |
| Draw Test[3] | | | | |
| 1st pass, % retained | 100 | 100 | 100 | 100 |
| 2nd pass, % retained | 90 | 100 | 100 | 100 |

TABLE I (cont.)

| | Example 5 | Example 6 | Example 7 | Example 8 |
|---|---|---|---|---|
| Epoxy Resin, equiv. | 1.02 | 1.1 | 1.03 | 1.03 |
| Amine Type/equiv.[4] | A/0.985 B[8]/0.015 | A/1.0 | C[9]/1.0 | D[10]/1.0 |
| Solvent Concentration[1], % | 40 | 30 | 30 | 30[11] |
| Residual Epoxide, % | 0.04 | N.D. | N.D. | N.D. |
| Viscosity[2] at 32% N.V. | $Z_1$—$Z_2$ | $Z_7$ | $Z_5$—$Z_6$ | U—V |
| Average Molecular Weight[5] | | | | |
| Weight | 8,369 | 6,055 | 31,266 | 4,123 |
| Number | 2,983 | 1,870 | 7,842 | 1,088 |
| Draw Test[3] | | | | |
| 1st pass, % retained | 100 | 100 | 95 | <50 |
| 2nd pass, % retained | 100 | 100 | 50 | <25 |

FOOTNOTES TO TABLE I

[1]Concentration of solvent employed during reaction as percent based upon combined weight of reactants plus solvent.

[2]Gardner viscosity of resinous product measured at 25°C at 32 percent resinous product and 68 percent solvent.

[3]Fisher Body Division of General Motors test method TM 47—18 dated September 22, 1976, which is essentially described in U.S. Patent 3,819,425, employing a die pressure of 2000 psi (140.6 kg/cm²) and a speed of 2 in/min (5.08 cm/min).

[4]Determined by titration with perchloric acid using crystal violet as an indicator.

[5]The average molecular weights were determined by gel permeation chromatography.

[6]The solvent employed was aromatic naphtha having a boiling point range of 155° to 173°C instead of ethylene glycol ethyl ether.

[7]Amine A was ethanolamine.

[8]Amine B was diethanolamine.

[9]Amine C was 1-amino-2-propanol.

[10]Amine D was aniline.

[11]The solvent employed was dipropylene glycol methyl ether instead of ethylene glycol ethyl ether.

Comparative Run A

For comparative purposes, a panel was coated as in the previous examples employing a high molecular weight epoxy resin having a weight average molecular weight of 49,288 as a 32 percent solution in ethylene glycol ethyl ether. The thus coated panel was cured as in the previous examples and subjected to the double draw test. The results were as follows:

1st pass, percent retained 25.

2nd pass, percent retained 0.

## Claims

1. A weldable coating composition comprising an electrically conductive pigment, an epoxy resin binder which is the reaction product of a polyglycidyl ether and an amine, and a solvent characterized in that the epoxy resin binder is the reaction product of an epoxy resin which is a polyglycidyl ether of a polyhydroxyl-containing compound or mixture of such epoxy resins having an average of more than

one, but less than three vicinal epoxy groups per molecule and a compound having only two amine hydrogen atoms, wherein the epoxy resin has an epoxide equivalent of less than 250 and when the epoxy resin contains aromatic or cycloaliphatic groups substituted with halogen atoms, the epoxide equivalent weight is calculated on the basis of the halogen atoms being hydrogen atoms, and wherein the epoxy to amine hydrogen equivalent ratio ranges from 0.9:1 to 1.1:1.

2. The composition of Claim 1 characterized in that up to 10 percent of the amine hydrogen equivalents are contributed by a compound having only one amine hydrogen.

**Revendications**

1. Composition soudable pour revêtement comprenant un pigment électriquement conducteur, un liant en résine époxy qui est le produit de réaction d'un polyglycidyléther et d'une amine, et un solvant, caractérisée par le fait que le liant en résine époxy est le produit de réaction d'une résine époxy qui est un polyglycidyléther d'un composé polyhydroxylé, ou d'un mélange de résines époxy de ce genre, ayant en moyenne plus d'un, mais moins de trois, groupes époxy vicinaux par molécule, et d'un composé ayant seulement deux atomes d'hydrogène d'amine, où la résine époxy a un équivalent d'époxyde inférieur à 250 et, quand la résine époxy contient des groupes aromatiques ou cycloaliphatiques substitués par des atomes d'halogènes, le poids équivalent d'époxyde est calculé en se basant sur les atomes d'halogène comme s'ils étaient des atomes d'hydrogène comme s'ils étaient des atomes d'hydrogène, et où le rapport des équivalents époxy aux équivalents hydrogène d'amine va de 0,9:1 à 1,1:1.

2. Composition selon la revendication 1, caractérisée par le fait que jusqu'à 10% des équivalents hydrogène d'amine sont fournis par un composé ayant un seul hydrogène d'amine.

**Patentansprüche**

1. Schweißbare Überzugszusammensetzung enthaltend ein elektrisch-leitendes Pigment, einen Epoxyharzbinder, der das Reaktionsprodukt eines Polyglycidyläthers und eines Amins ist, und ein Lösungsmittel, dadurch gekennzeichnet, daß der Epoxyharzbinder das Reaktionsprodukt eines Epoxyharzes ist, daß ein Polyglycidyläther einer polyhydroxylhaltigen Verbindung oder einer Mischung solcher Epoxyharze mit im Durchschnitt mehr als einer, aber weniger als drei benachbarten Epoxygruppen pro Molekül und einer Verbindung mit nur zwei Aminowasserstoffen ist, wobei das Epoxyharz ein Epoxidäquivalent von weniger als 250 hat und wobei, wenn das Epoxyharz mit Halogenatomen substituierte aromatische oder cycloaliphatische Gruppen enthält, das Epoxidäquivalentgewicht auf der Basis berechnet wird, daß die Halogen-atome Wasserstoffatome sind, und wobei das Äquivalentverhältnis von Epoxy zu Aminwasserstoff von 0,9:1 bis 1,1:1 schwankt.

2. Zusammensetzung nach Anspruch 1, dadurch gekennzeichnet, daß bis zu 10% der Aminwasserstoffäquivalente durch eine Verbindung mit nur einem Aminwasserstoff beigestellt werden.